Europäisches Patentamt

European Patent Office

Office européen des brevets

(11) Publication number: **0 297 739**
**A1**

## (12) EUROPEAN PATENT APPLICATION

(21) Application number: **88305210.2**

(22) Date of filing: **08.06.88**

(51) Int. Cl.4: **B32B 1/10 , B29C 43/00 , B32B 31/20**

(30) Priority: **01.07.87 GB 8715471**

(43) Date of publication of application:
**04.01.89 Bulletin 89/01**

(84) Designated Contracting States:
**AT BE CH DE ES FR GB GR IT LI NL SE**

(71) Applicant: **MICROPORE INTERNATIONAL LIMITED**
**Hadzor Hall Hadzor**
**Droitwich Worcestershire WR9 7DJ(GB)**

(72) Inventor: **Hughes, John Thomas**
**Arbour House 6 Cromwell Crescent**
**Worcester WR5 2JW(GB)**

(74) Representative: **Jackson, Derek Charles**
**Anthony Cundy & Co. 384 Station Road**
**Dorridge Solihull West Midlands B93 8ES(GB)**

(54) Moulding thermal insulation.

(57) Shaped pieces (14) of thermal insulation material are moulded in a mould assembly which incorporates a press tool (1) comprising a plurality of elements (2) secured together. Each element (2) defines a portion of the shaped piece of thermal insulation material to be produced and at least one element includes means permitting the escape of air through the press tool, for example the provision of grooves (3) or by making the element of a porous material. A predetermined amount of loose particulate thermal insulation material (13) is charged into the mould and is compressed with excess air escaping through the press tool (1). A compacted shaped piece of thermal insulation material (14) is formed which is removed from the mould.

FIG 1

## MOULDING THERMAL INSULATION

The present invention relates to an apparatus and a method for moulding thermal insulation materials.

It is known that high performance thermal insulation shapes can be produced by compacting a mixture of a microporous powder, an opacifier and a reinforcing fibre by first intimately mixing the constituents and then compacting the mixture in a press by applying pressure. The press is preferably designed to permit easy release of air from the mixture and generally some parts of the press are constructed of porous materials or are provided with holes drilled in strategic places and which are of a size such that air may readily pass through them but the mixture will not pass even when pressurisation of the mixture takes place during compaction. The size of the holes depend on the type of mixture to be compacted, the degree of pressurisation which takes place during compaction, the speed of travel of the press components, the thickness of the article produced, and even the density of the article produced. The typical size range for a microporous thermal insulation is in the range 0.5 to 2mm but in some cases will be smaller or larger in diameter. The holes do not need to be circular although this is usually the most convenient shape as the holes are generally formed by drilling.

In many cases it is desirable to have the holes closely spaced so that the press tool is highly permeable. When the press tool has a large cross-section or a complicated profile the drilling of a large number of small diameter holes is extremely time consuming, difficult and expensive. The difficulties can be even more severe when it is desirable to have a stepped or tapered hole which happens when close control of air flow rates is required.

These difficulties are encountered when a press tool is employed to produce curved shapes of microporous thermal insulation material which may be used, for example, for providing layers of insulation on a pipe and where the typical shape is a half pipe shell. In this case both the upper and lower press tools will be shaped.

It is an object of the present invention to provide an apparatus and a method for moulding complex shapes of microporous thermal insulation materials which is simple to construct and use and economically viable.

According to one aspect of the present invention there is provided an apparatus for moulding shaped pieces of thermal insulation material by compaction incorporating a press tool which comprises a plurality of elements each defining a portion of the shaped piece of insulation material to be produced, at least one element including means permitting the escape of air through the press tool, and means for securing together the elements.

According to a second aspect of the present invention there is provided a method of moulding shaped pieces of thermal insulation material by compaction, which method comprises the steps of: providing a mould assembly which incorporates a press tool comprising a plurality of elements secured together, each element defining a portion of the shaped piece of thermal insulation material to be produced and at least one element including means permitting the escape of air through the press tool;

charging a predetermined amount of loose particulate thermal insulation material into the mould;

compressing the loose particulate insulation in the mould, with excess air escaping through the press tool, to form a compacted shaped piece of thermal insulation material; and

removing the shaped piece of thermal insulation material from the mould.

Preferably, grooves are provided in at least one face of each of the elements which adjoins an adjacent element so as to define holes through the press tool to permit the escape of air. The grooves may be stepped.

Alternatively, said at least one element may be made of a porous material which permits the escape of air through the press tool.

The plurality of elements may be secured together by passing elongate pins through holes provided in the elements and threading nuts onto threaded end portions of the pins so as to lock the elements in position.

The plurality of elements may be substantially identical.

The loose particulate thermal insulation material may comprise a microporous thermal insulation material such as silica aerogel or pyrogenic silica. The thermal insulation material may include an opacifier and/or a reinforcing fibre.

For a better understanding of the present invention and to show more clearly how it may be carried into effect reference will now be made, by way of example, to the accompanying drawings in which:

Figure 1 is a diagrammatic perspective view of a press tool component according to the present invention;

Figure 2 is a diagrammatic perspective view of one of a number of identical elements which are assembled together in the press tool shown in Figure 1;

Figure 3 is a diagrammatic cross-sectional view through a press employing the press tool shown in Figure 1; and

Figure 4 is a diagrammatic perspective view of a curved shaped piece of insulation material formed in the press shown in Figure 3.

The figures generally illustrate a press tool for producing shaped elements such as pieces of compacted powdery insulation material. The particular configuration of the shaped elements, and therefore of the moulding surfaces of the press tool, shown in the drawings, are of no particular significance and a wide range of shapes can be employed.

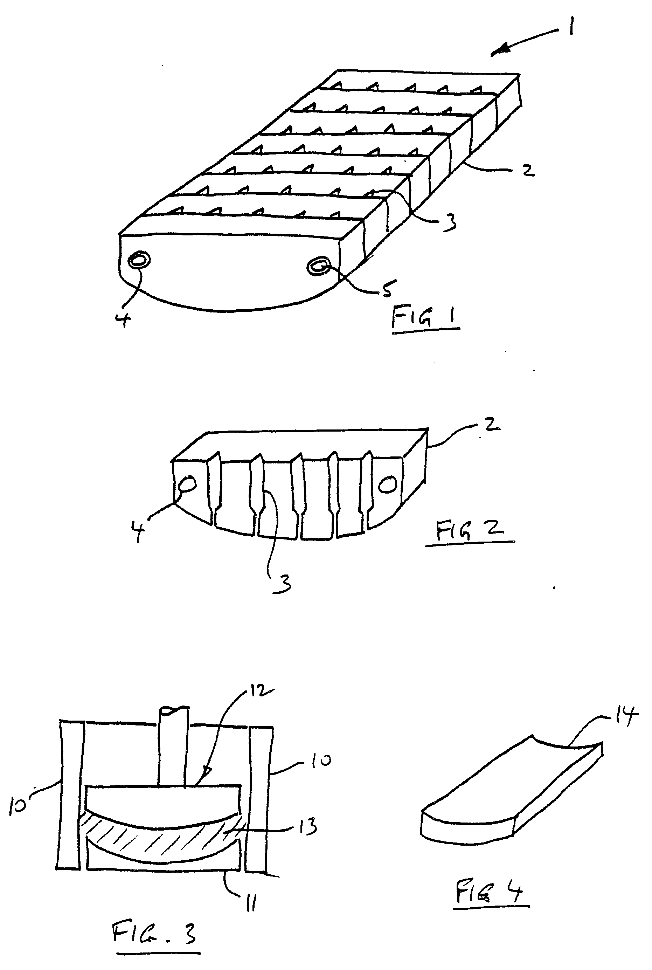

Figure 1 shows a press tool 1 made of a number of substantially identical elements 2 which are shown in more detail in Figure 2. Each element 2 is readily produced from flat sheet which is shaped to a desired configuration on a CNC milling machine. This permits a large number of identical elements 2 to be produced with minimum cost and effort. The elements have stepped grooves 3 machined into one face thereof so that when a plurality of elements are secured together to form the press tool 1 the grooves provide holes passing through the press tool. Although it is not shown in the drawings the elements 2 can have grooves machined into opposite faces thereof.

The degree of porosity of the press tool 1 is controlled by varying a number of factors such as the number of elements used to produce the press tool, and therefore the individual thickness thereof, the number of grooves provided in the face of each element 2 and by the shape and size of the grooves themselves.

The elements are secured together by passing pins 5 through apertures 4 provided in the elements. The pins 5 terminate in threaded portions so that a nut can be used to lock the elements in position. We have found that it is desirable to use such a securing method rather than a permanent means of fixing such as gluing because if the press tool suffers localised damage it is easy to strip the tool down and separate the elements so that any damaged elements can be replaced.

We have found that press tools made in this way can be much lower in cost than press tools made by alternative means. For some of the shapes we have made the only alternative way to produce a satisfactory press tool would have been to cast the shape in a suitable metal such as steel and then to clean, polish and drill the casting.

The elements of the press tool can be made from a wide variety of materials. Plastics materials are particularly advantageous because they are lightweight and can readily be milled to shape. Changes can readily be made to the shape because no pattern is needed, it merely being necessary to change the cutting programme of the CNC milling machine.

Press tools made in this way are particularly useful for moulding shapes of microporous thermal insulation materials. Such insulation materials generally comprise a finely divided silica aerogel or pyrogenic silica which provides the microporous structure, an opacifier and a reinforcing fibre.

The opacifier may be a radiation scattering material having a high refractive index such as titania, alumina, zirconia, iron oxide or chrome oxide, a radiation absorbing material such as carbon black or a radiation reflecting material such as a metal. The opacifier may be in the form of a powder, short fibres or flakes. The reinforcing fibre may be, for example, ceramic fibre, glass fibre or other inorganic or organic fibre and should have a minimum length of about 2mm.

The relative proportions of the various materials depends on the intended use of the thermal insulation material. For example, the higher the temperature at which the insulation material is to be used, the higher will be the proportion of opacifier used. However, the proportion of finely divided powder is typically about 40 to 90 per cent by weight, the proportion of opacifier is typically about 0 to 40 per cent by weight and the proportion of reinforcing fibre is typically 1 to 50 per cent by weight. A preferred thermal insulation material contains about 63 per cent by weight finely divided powder, 30 per cent by weight opacifier and 7 per cent by weight reinforcing fibre.

Microporous thermal insulation materials are particularly difficult to shape because of the nature of the bonding which occurs when a mixture of such insulation material is compacted. The particulate matter in the mixture becomes bonded one particle with another with the bonded particles acting as rods which are resilient so that when the compacted mixture is removed from a mould the resulting block of material has a shape which is different to that defined by the mould because the rods of bonded particles spring back from their fully compressed conditions and the shaped article is larger than the shape defined by the mould and is often also distorted. It is therefore difficult to predict accurately the final shape of an article formed of compacted microporous thermal insulation material and it is commonly necessary to adjust the shape of the press tool. The press tool shown in the drawings is, however, easily modified.

Figure 3 illustrates how a shaped piece of microporous thermal insulation material can be made using a press tool according to Figures 1 and 2. Figure 3 shows a press which includes side walls 10, a base 11 and a piston 12. Any one or more of these components can be made by the method described with reference to Figures 1 and 2.

A predetermined amount of an insulation material such as an intimate mixture of loose particulate microporous material 13 is charged onto the base 11 and is then compacted by advancing the piston 12 towards the base 11 so that, in the case of microporous insulation material, the original mixture is compacted by a factor of about 7 so that the final density is typically in the range 300 - 400 Kg m⁻³ although densities outside this range may sometimes be of use. During compacting and consolidation of the mixture a large volume of air requires to escape so it is desirable that the piston and/or the base should be porous. The material from which the piston and the base are made may itself be porous or air release holes may be provided.

Figure 4 shows a curved shaped piece of thermal insulation material 14 formed in the press shown in Figure 3. However, such a press can be used to produce pieces of thermal insulation material having a wide variety of shapes and sizes.

## Claims

1. Apparatus for moulding shaped pieces (14) of thermal insulation material by compaction with a press tool (1) characterised in that the press tool comprises a plurality of elements (2) each defining a portion of the shaped piece of insulation material to be produced, at least one element (2) including means permitting the escape of air through the press tool, and means for securing together the elements.

2. Apparatus as claimed in claim 1, characterised in that grooves (3) are provided in at least one face of each of the elements which adjoins an adjacent element so as to define holes through the press tool to permit the escape of air.

3. Apparatus as claimed in claim 2, characterised in that the grooves (3) are stepped.

4. Apparatus as claimed in claim 1, characterised in that the at least one element (2) is made of a porous material which permits the escape of air through the press tool.

5. Apparatus as claimed in any one of claims 1 to 4, characterised in that the plurality of elements (2) are secured together by passing elongate pins (5) through holes (4) provided in the elements and threading nuts onto threaded end portions of the pins so as to lock the elements in position.

6. Apparatus as claimed in any one of claims 1 to 5, characterised in that the plurality of elements (2) are substantially identical.

7. A method of moulding shaped pieces (14) of thermal insulation material by compaction characterised in that a mould assembly is provided which incorporates a press tool (1) comprising a plurality of elements (2) secured together, each element (2) defining a portion of the shaped piece of thermal insulation to be produced, at least one element (2) including means permitting the escape of air through the press tool; a predetermined amount of loose particulate thermal insulation material (13) is charged into the mould; the loose particulate insulation is compressed in the mould, with excess air escaping through the press tool (1), to form a compacted shaped piece of thermal insulation material; and the shaped piece (14) of thermal insulation material is removed from the mould.

8. A method according to claim 7, characterised in that grooves (3) are provided in at least one face of each of the elements (2) which adjoins an adjacent element so as to define holes through the press tool (1) to permit the escape of air.

9. A method according to claim 8, characterised in that the grooves (3) are stepped.

10. A method according to claim 7, characterised in that the at least one element (2) is made of a porous material which permits the escape of air through the press tool (1).

11. A method according to any one of claims 7 to 10, characterised in that the plurality of elements (2) are secured together by passing elongate pins (5) through holes (4) provided in the elements and threading nuts onto threaded end portions of the pins so as to lock the elements in position.

12. A method according to any one of claims 7 to 11, characterised in that the plurality of elements (2) are substantially identical.

13. A method according to any one of claims 7 to 12, characterised in that the loose particulate thermal insulation material (13) comprises a microporous thermal insulation material such as silica aerogel or pyrogenic silica.

14. A method according to claim 13, characterised in that the thermal insulation material (13) includes an opacifier.

15. A method according to claim 13 or 14, characterised in that the thermal insulation material (13) includes a reinforcing fibre.

FIG 1

FIG 2

FIG. 3

FIG 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-2 726 751 (ISOVOLTA-THERMAX) * figures; claim 3 * | 1-3,7 | B 32 B    1/10 B 29 C   43/00 B 32 B   31/20 |
| A | DE-A-2 704 529 (NISSAN MOTOR CO. LTD.) * page 9, line 3 - page 10, line 15; figure 1 * | 1,7 | |
| A | EP-A-0 069 543 (OY PARTEK AB) * figure 3; claim 7 * | 1 | |
| A | EP-A-0 124 387 (ISOVER SAINT-GOBAIN) * abstract * | 1 | |
| P,A | EP-A-0 239 550 (LAXA BRUKS AKTIEBOLAG) | 1 | |

**TECHNICAL FIELDS SEARCHED (Int. Cl.4)**

F 16 L   59/00
B 32 B    1/00
.B 32 B   31/00
B 29 C   43/00
B 30 B   15/00

The present search report has been drawn up for all claims .

| Place of search | Date of completion of the search | Examiner |
|---|---|---|
| BERLIN | 20-09-1988 | SCHAEFFLER C.A.A. |